# EUROPEAN PATENT APPLICATION

(11) **EP 3 609 186 A1**
(43) Date of publication of application: **12.02.2020**
(21) Application number: 17854183.5
(22) Date of filing: 21.09.2017
(51) Int. Cl.: H04N 21/232, H04N 21/41, G06K 9/00

(54) **METHOD FOR ACQUIRING AND PROVIDING INFORMATION AND RELATED DEVICE**

(30) Priority: 07.04.2017 CN 201710223539
(71) Applicant: BOE Technology Group Co., Ltd., Beijing 100015 (CN)
(72) Inventor: QIANG, Zhiqiang, Beijing 100176 (CN); ZHAO, Junjie, Beijing 100176 (CN)
(74) Representative: Cohausz & Florack
(86) International application number: PCT/CN2017/102791
(87) International publication number: WO 2018/184360

(57) **Abstract**

The disclosure discloses a method and apparatus for obtaining information, and a method and apparatus for providing information so as to enable a user to obtain element information of an image of a picture being displayed on a picture display device more conveniently. A method for obtaining information according to the disclosure includes: transmitting a screenshot instruction to instruct a picture display device to take a screenshot of an image of a picture being displayed; and obtaining element information in the image.

## Description

This application claims priority to Chinese Patent Application No. 201710223539.7, filed with the Chinese Patent Office on April 7, 2017 and entitled "Methods and apparatuses for obtaining and providing information", the content of which is hereby incorporated by reference in its entirety.

### Field

The present disclosure relates to the field of information technologies, and particularly to a method and apparatus for obtaining information, and a method and apparatus for providing information.

### Background

With the popularization of intelligent TV sets, there are more and more demands of watching users. For example, a TV watching user intends to join into a TV program, to socially interact with other watching users, etc., and sometimes also intends to actively obtain more information through the TV program, so higher intelligent operability and a better user experience of the intelligent TV sets are desirable.

At present, if a TV watching user finds an interesting person, object, landscape, etc., but does not know the name thereof or other information about it, then it may be difficult to search over the Internet in a timely manner, and troublesome to know the information otherwise later.

### Summary

An embodiment of the disclosure provides a method for obtaining information, the method including: transmitting, by a mobile terminal, a screenshot instruction to a picture receiving device to instruct a picture display device in the picture receiving device to take a screenshot of an image of a picture being displayed; and obtaining element information in the image.

An embodiment of the disclosure provides a method for providing information, the method including: receiving a screenshot instruction to instruct a picture display device to take a screenshot of an image of a picture being displayed; taking a screenshot of the image of the picture being displayed on the picture display device, and recognizing elements in the image in response to the screenshot instruction; and determining element information in the image, and providing it to a user.

An embodiment of the disclosure provides an apparatus for obtaining information, wherein the apparatus is a mobile terminal, and includes: a transmitting unit configured to transmit a screenshot instruction to a picture receiving device to instruct a picture display device in the picture receiving device to take a screenshot of an image of a picture being displayed; and an obtaining unit configured to obtain element information in the image.

An embodiment of the disclosure provides an apparatus for providing information, the apparatus including: a receiving unit configured to receive a screenshot instruction to instruct a picture display device to take a screenshot of an image of a picture being displayed; a recognizing unit configured to take a screenshot of the image of the picture being displayed on the picture display device, and recognize elements in the image, in response to the screenshot instruction; and a providing unit configured to determine element information in the image, and provide it to a user.

### Brief Description of the Drawings

In order to make the technical solutions according to the embodiments of the disclosure more apparent, the drawings to which reference is made in the description of the embodiments will be introduced briefly, and apparently the drawings to be described below are only some embodiments of the disclosure, and those ordinarily skilled in the art can further derive other drawings from these drawings here without any inventive effort. In the drawings:
Fig.1 is a schematic flow chart of a method for transmitting information according to an embodiment of the disclosure;
Fig.2 is a schematic flow chart of another method for transmitting information according to an embodiment of the disclosure;
Fig.3 is a schematic flow chart of a further method for transmitting information according to an embodiment of the disclosure;
Fig.4 is a schematic flow chart of a method for obtaining information according to an embodiment of the disclosure;
Fig.5 is a schematic flow chart of a method for providing information according to an embodiment of the disclosure;
Fig.6 is a schematic flow chart of another method for providing information according to an embodiment of the disclosure;
Fig.7 is a schematic structural diagram of an apparatus for obtaining information according to an embodiment of the disclosure;
Fig.8 is a schematic structural diagram of an apparatus for providing information according to an embodiment of the disclosure;
Fig.9 is a schematic structural diagram of another apparatus for providing information according to an embodiment of the disclosure; and
Fig.10 is a schematic structural diagram of a terminal according to an embodiment of the disclosure.

### Detailed Description of the Embodiments

Embodiments of the disclosure provide a method and apparatus for obtaining information, and a method and apparatus for providing information so as to enable a user to obtain element information of an image of a picture being displayed on a picture display device more conveniently.

With the technical solutions according to the embodiments of the disclosure, a screenshot of an image is taken on an intelligent TV set, and searched for element information, the element information is displayed in a split screen mode, and finally the element information is transmitted to an intelligent terminal of a user, so that information about a person, an object, a landscape, etc., (i.e., elements) in the TV image can be presented and transmitted to the user conveniently and rapidly without hindering a TV program from being played and the user from watching.

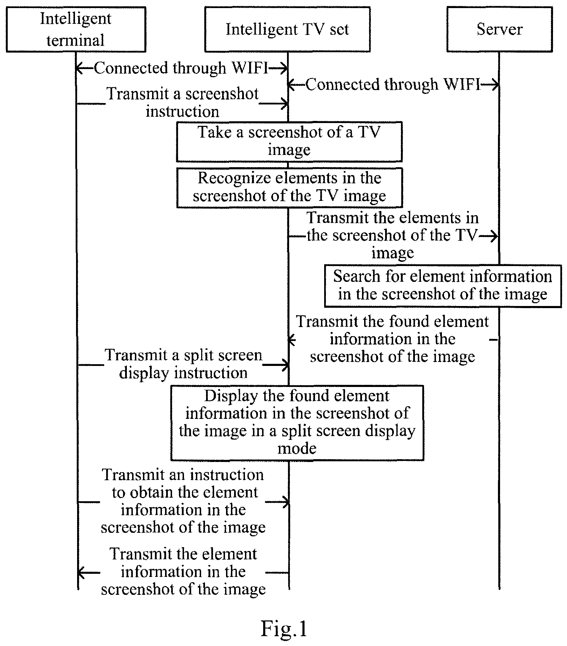

Referring to Fig.1, a method for transmitting information according to an embodiment of the disclosure includes the following steps.
1) An intelligent terminal is connected with an intelligent TV set through WIFI.
   Here the intelligent terminal is a mobile phone, a PAD, a computer, or another handheld intelligent terminal operated by a user.
   The intelligent TV set has a function of displaying a TV image, but also can be connected with the Internet, and search a server over the Internet for related information.
2) The intelligent TV set is connected with a server through WIFI.
   Here the two steps above can be performed concurrently. Furthermore the intelligent terminal can alternatively be connected otherwise with the intelligent TV set, and the intelligent TV set can alternatively be connected otherwise with the server, the embodiment of the disclosure will not be limited to their connections through WIFI.
3) The intelligent terminal transmits a screenshot instruction to the intelligent TV set.
   For example, the screenshot instruction can carry information about target elements. For example, the target elements can be a human face, clothing, shoes, a hat, furniture, a vehicle, etc., in an image displayed on the intelligent TV set. Stated otherwise, a user can instruct the intelligent TV set to take a screenshot, and instruct the intelligent TV set to recognize the target elements in the screenshot of the image.
4) The intelligent TV set takes a screenshot of a TV image, that is, takes a screenshot of an image being displayed, and obtains the screenshot of the image.
5) The intelligent TV set recognizes elements in the screenshot of the image, e.g., a person, an object, a landscape, etc.
6) The intelligent TV set transmits an image of the elements in the screenshot of the image to a server.
7) Upon reception of the image of the elements, the server searches for the image of the elements, or searches another server or terminal over the Internet for information about the elements in the screenshot of the image, i.e., element information.
8) The server transmits the found element information of the screenshot of the image to the intelligent TV set.
9) The intelligent terminal transmits a split screen display instruction to the intelligent TV set.
   It shall be noted that after the server transmits the found element information of the screenshot of the image to the intelligent TV set, and before the intelligent terminal transmits the split screen display instruction to the intelligent TV set, the intelligent TV set can transmit a prompt including YES and NO options to the intelligent terminal to let the user decide whether to display the element information in a split screen mode, so if the user decides to display the element information on the intelligent TV set in a split screen mode, then he or she may select the YES option (so that the split screen display instruction is transmitted), so the intelligent TV set displays the found element information of the screenshot of the image in a split screen mode; otherwise, the intelligent TV set may not display the found element information of the screenshot of the image in a split screen mode.
10) The intelligent TV set displays the found element information of the screenshot of the image in a split screen mode.
   It shall be noted that the intelligent TV set can alternatively display the found element information of the screenshot of the image, transmitted by the server to the intelligent TV set, in a split screen mode directly by default upon reception of the element information transmitted by the server, without transmitting any prompt to let the user decide whether to display the element information in a split screen mode and waiting for the split screen display instruction to be transmitted by the user.
11) The intelligent terminal transmits an instruction (or a request) to obtain the element information of the screenshot of the image, to the intelligent TV set.
12) The intelligent TV set transmits the obtained element information of the screenshot of the image to the intelligent terminal.

It shall be noted that the intelligent TV set can alternatively push the found element information of the screenshot of the image, transmitted by the server to the intelligent TV set, directly to the intelligent terminal of the user without displaying the element information in a split screen mode, that is, the user may not transmit any instruction to obtain the element information of the screenshot of the image through the intelligent terminal.

Furthermore the intelligent TV set can transmit the obtained element information of the screenshot of the image to the intelligent terminal, or can transmit related information for obtaining the element information of the screenshot of the image to the intelligent terminal, and for example, the related information is a two-dimension code or a link to an address, so the user can obtain the element information of the screenshot of the image by clicking on the two-dimension code or the link to the address through the intelligent terminal.

The description and generalization of the respective steps above will equally apply to the following steps similar thereto.

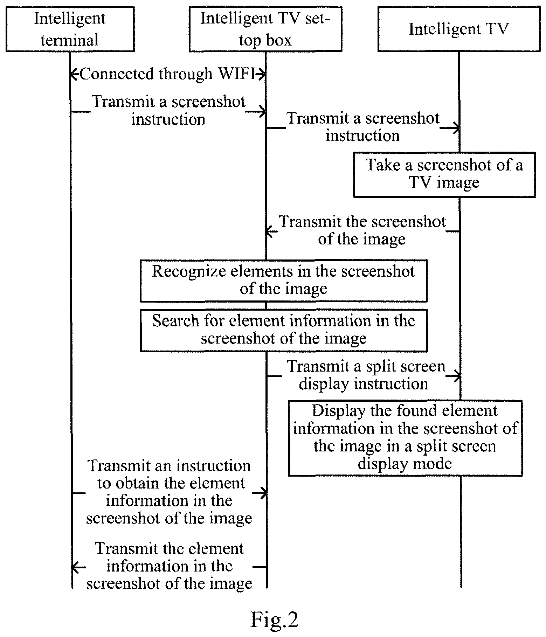

In another embodiment of the disclosure, a search is made for the element information through an intelligent TV set-top box instead of the server. Referring to Fig.2, another method for transmitting information according to an embodiment of the disclosure includes the following steps.
1) An intelligent terminal is connected with an intelligent TV set-top box through WIFI.
   The intelligent TV set-top box can be connected with an intelligent TV set through WIFI or in a wired manner.
2) The intelligent terminal transmits a screenshot instruction to the intelligent TV set-top box.
   For example, the screenshot instruction can carry information about target elements. For example, the target elements can be a human face, clothing, shoes, a hat, furniture, a vehicle, etc., in an image displayed on the intelligent TV set. Stated otherwise, a user can instruct the intelligent TV set to take a screenshot through the intelligent terminal (the screenshot instruction can be forwarded to the intelligent TV set through the intelligent TV set-top box), and instruct the intelligent TV set-top box to recognize the target elements in the screenshot of the image.
3) The intelligent TV set-top box transmits a screenshot instruction to the intelligent TV set.
4) The intelligent TV set takes a screenshot of a TV image.
5) The intelligent TV set transmits the screenshot of the image to the intelligent TV set-top box.
6) The intelligent TV set-top box recognizes elements in the screenshot of the image, e.g., a person, an object, a landscape, etc.
7) The intelligent TV set-top box searches the Internet for element information in the screenshot of the image.
8) The intelligent TV set-top box transmits a split screen display instruction to the intelligent TV set.
9) The intelligent TV set displays the found element information of the screenshot of the image in a slit screen mode.
10) The intelligent terminal transmits an instruction to obtain the element information of the screenshot of the image, to the intelligent TV set-top box.
11) The intelligent TV set-top box transmits the obtained element information of the screenshot of the image to the intelligent terminal.

Particularly the intelligent TV set-top box may not transmit any split screen display instruction to the intelligent TV set, and the intelligent TV set may not display the element information of the screenshot of the image, found by the intelligent TV set-top box, in a split screen display mode, but instead the intelligent TV set-top box can transmit the obtained element information of the screenshot of the image directly to the intelligent terminal.

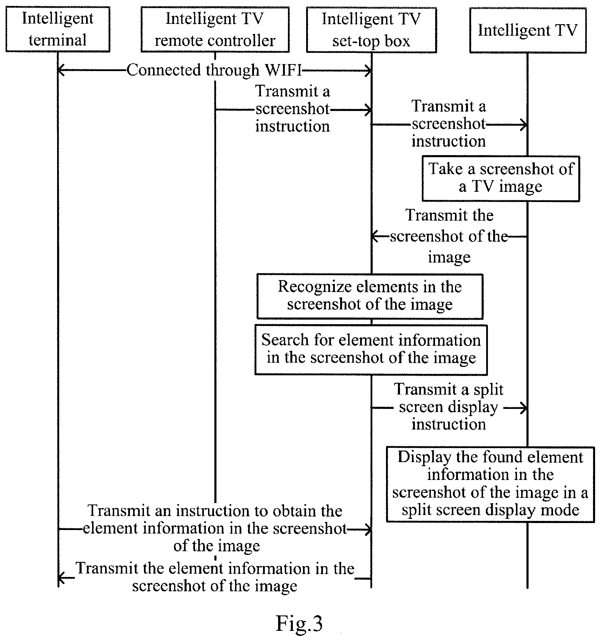

Optionally the user can further transmit the screenshot instruction through a remote controller of the intelligent TV set. Referring to Fig.3, a further method for transmitting information according to an embodiment of the disclosure includes the following steps.
1) An intelligent terminal is connected with an intelligent TV set-top box through WIFI.
   The intelligent TV set-top box can be connected with an intelligent TV set through WIFI or in a wired manner.
   A remote controller of the intelligent TV set can be connected with the intelligent TV set through WIFI, in an infrared manner, etc.
2) The remote controller of the intelligent TV set transmits a screenshot instruction to the intelligent TV set-top box.
3) The intelligent TV set-top box transmits the screenshot instruction to the intelligent TV set.
   It shall be noted that the remote controller of the intelligent TV set can alternatively transmit the screenshot instruction directly to the intelligent TV set instead of having the screenshot instruction forwarded to the intelligent TV set through the intelligent TV set-top box.
   For example, the screenshot instruction in this embodiment can carry information about target elements. For example, the target elements can be a human face, clothing, shoes, a hat, furniture, a vehicle, etc., in an image displayed on the intelligent TV set. Stated otherwise, a user can instruct the intelligent TV set to take a screenshot through the remote controller, and instruct the intelligent TV set-top box to recognize the target elements in the screenshot of the image.
4) The intelligent TV set takes a screenshot of a TV image.
5) The intelligent TV set transmits the screenshot of the image to the intelligent TV set-top box.
6) The intelligent TV set-top box recognizes elements in the screenshot of the image, e.g., a person, an object, a landscape, etc.
7) The intelligent TV set-top box searches the Internet for element information of the target elements in the screenshot of the image.
8) The intelligent TV set-top box transmits a split screen display instruction to the intelligent TV set.
9) The intelligent TV set displays the found element information of the screenshot of the image in a slit screen mode.
10) The intelligent terminal transmits an instruction to obtain the element information of the screenshot of the image, to the intelligent TV set-top box.
11) The intelligent TV set-top box transmits the obtained element information of the screenshot of the image to the intelligent terminal.

Particularly the intelligent TV set-top box may not transmit any split screen display instruction to the intelligent TV set, and the intelligent TV set may not display the element information of the screenshot of the image, found by the intelligent TV set-top box, in a split screen display mode, but instead the intelligent TV set-top box can transmit the obtained element information of the screenshot of the image directly to the intelligent terminal.

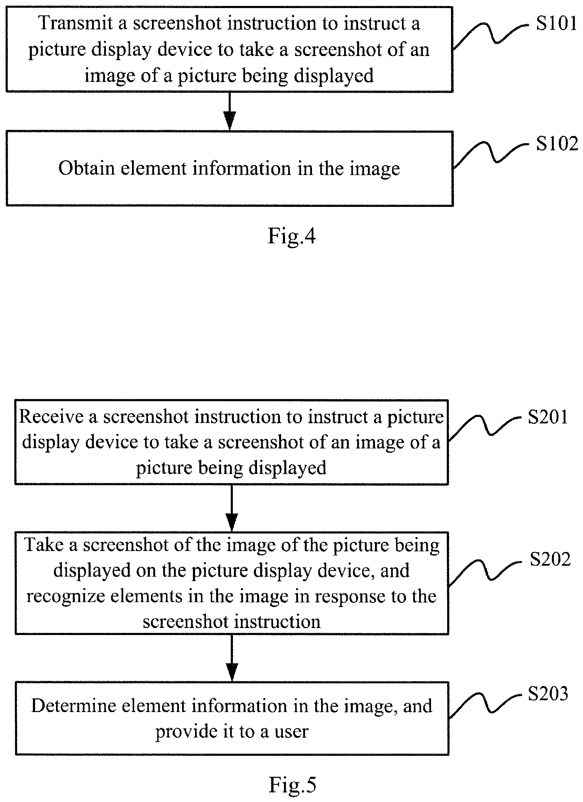

Referring to fig.4, a method for obtaining information at the mobile terminal (e.g., intelligent terminal or remote controller above) side according to an embodiment of the disclosure includes the following steps.

S101 is to transmit, by a mobile terminal, a screenshot instruction to a picture receiving device to instruct a picture display device in the picture receiving device to take a screenshot of an image of a picture being displayed.

The picture receiving device in the embodiment of the disclosure can be the picture display device, or the picture receiving device can be a digital video transforming box (e.g., the set-top box above) connected with the picture display device. For example, the picture display device can be an intelligent TV set, a computer, a PAD, or another device with a picture displaying function.

S102 is to obtain element information in the image in the step S101.

With this method, the screenshot instruction can be transmitted to instruct the picture display device to take a screenshot of the image of the picture being displayed, and to obtain the element information in the image, so that a user can obtain the element information of the image of the picture being displayed, more conveniently.

Optionally the mobile terminal can be a mobile phone, or a remote controller of the picture receiving device, that is, the user can transmit the screenshot instruction through the mobile phone, or the remote controller of the picture receiving device.

Optionally before the element information in the image is obtained, the method further includes transmitting a request for the element information in the image to the picture receiving device.

Optionally the element information in the image in the step S101 can be obtained by transmitting the request for the element information in the image in the step 101 to the picture receiving device, and receiving the element information in the image transmitted by the picture receiving device, through the mobile terminal, e.g., a mobile phone.

Correspondingly referring to Fig.5, a method for providing information at the picture receiving device (e.g., intelligent TV set, intelligent TV set-top box, and server) side according to an embodiment of the disclosure includes the following steps.

S201 is to receive a screenshot instruction to instruct a picture display device to take a screenshot of an image of a picture being displayed.

S202 is to take a screenshot of the image of the picture being displayed on the picture display device, and to recognize elements in the image, in response to the screenshot instruction.

S203 is to determine element information in the image, and to provide it to a user.

Optionally the screenshot instruction received in the step 201 above can be transmitted by an intelligent terminal, e.g., a mobile phone, etc., directly to an intelligent TV set, or can be transmitted by an intelligent terminal to an intelligent TV set through an intelligent TV set-top box, or can be transmitted by a remote controller of an intelligent TV set to the intelligent TV set through an intelligent TV set-top box.

Optionally a screenshot of the image of the picture being displayed on the picture display device can be taken in response to the screenshot instruction in the step S202 above by the picture display device taking a screenshot of the current picture. Particularly the intelligent TV set can take a screenshot of the image of the picture being displayed, in response to the screenshot instruction upon reception of the screenshot instruction.

Optionally after a screenshot of the image of the picture being displayed on the picture display device is taken in response to the screenshot instruction in the step S202 above, the elements in the image can be recognized by a digital video transforming box of the picture display device. That is, the picture display device can transmit the screenshot of the image to the digital video transforming box, and the digital video transforming box can recognize the elements in the image. Alternatively, after a screenshot of the image of the picture being displayed on the picture display device is taken in response to the screenshot instruction in the step S202 above, the picture display device can recognize the elements in the image directly.

Particularly the elements in the image can be recognized as a person, an object, a landscape, etc., for example.

Optionally the element information in the image can be determined in the step S203 above particularly as follows.

The element information in the image is obtained through a server, or a digital video transforming box of the picture display device. Particularly a search can be made for the element information, or another server or terminal can be searched for the element information in the screenshot of the image over the Internet. Particularly the element information can be a particular name of and other information about the person, a link to a shop of and other information about the object, an introduction to and other information about the landscape, etc.

Optionally the element information can be provided to the user in the step S203 above particularly as follows.

The element information is output and displayed on the picture display device in a split screen display mode.

Optionally before the element information is output and displayed on the picture display device in a split screen display mode, the method can further include the following step.

A split screen display instruction transmitted by the mobile terminal is received, so that the picture display device outputs and displays the element information in a split screen display mode upon reception of the split screen display instruction.

Of course, the element information can be provided to the user in the step S203 above by a server, or a digital video transforming box of the picture display device obtaining and then transmitting the element information in the image directly to an intelligent terminal of the user.

Optionally after the image information in the image is determined and provided to the user, the method can further include the following steps.

A request transmitted by the mobile terminal for the element information in the image is received.

The element information, or related information for obtaining the element information is transmitted to the mobile terminal in response to the request.

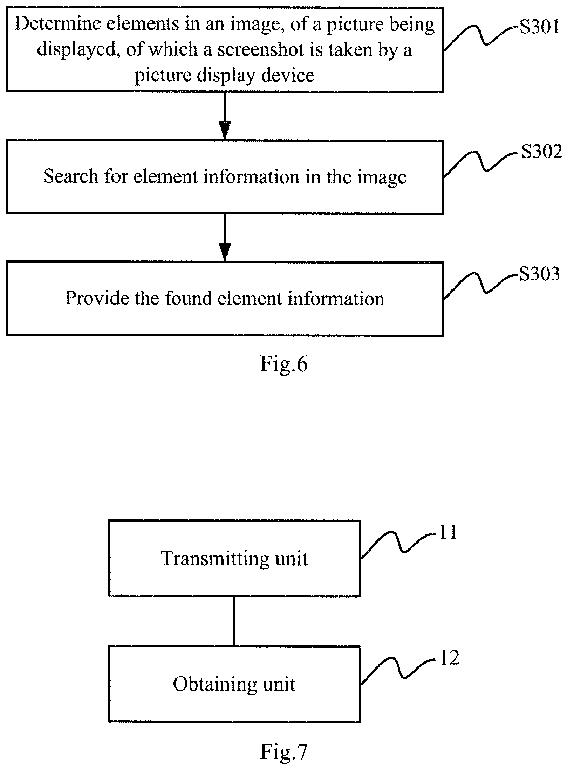

Correspondingly referring to Fig.6, a method for providing information at the digital video transforming box (e.g., intelligent TV set-top box above) side of a picture display device, or the server side according to an embodiment of the disclosure includes the following steps.

S301 is to determine elements in an image, of a picture being displayed, of which a screenshot is taken by a picture display device.

S302 is to search for element information in the image.

S303 is to provide the found element information.

Optionally at the digital video transforming box side, the elements in the image, of the picture being displayed, of which a screenshot is taken by the picture display device, are determined in the step S301 above particularly as follows.

A screenshot instruction is received to instruct the picture display device to take a screenshot of the image of the picture being displayed, where the screenshot instruction can be transmitted by a mobile phone, or can be transmitted by a remote controller of the picture display device.

The screenshot instruction is transmitted to the picture display device.

The screenshot, of the image of the picture being displayed, taken by the picture display device and transmitted by the picture display device, is received.

The elements in the image are recognized.

Optionally the found element information can be provided in the step S303 above by providing the found element information to the picture display device.

Optionally a split screen display instruction is transmitted to provide the element information in the image to the picture display device, and to instruct the picture display device to display the element information in the image in a slit screen display mode.

In correspondence to the methods above, embodiments of the disclosure further provide the following apparatuses.

Referring to Fig.7, an apparatus for obtaining information at the mobile terminal (e.g., intelligent terminal or remote controller above) side according to an embodiment of the disclosure includes the following units.

A transmitting unit 11 is configured to transmit a screenshot instruction to a picture receiving device to instruct a display device in the picture receiving device to take a screenshot of an image of a picture being displayed.

An obtaining unit 12 is configured to obtain element information in the image.

Optionally the mobile terminal can be a mobile phone, or a remote controller of the picture display device.

Optionally before the obtaining unit 12 obtains the element information in the image, the transmitting unit 11 is further configured to transmit a request for the element information in the image to the picture receiving device.

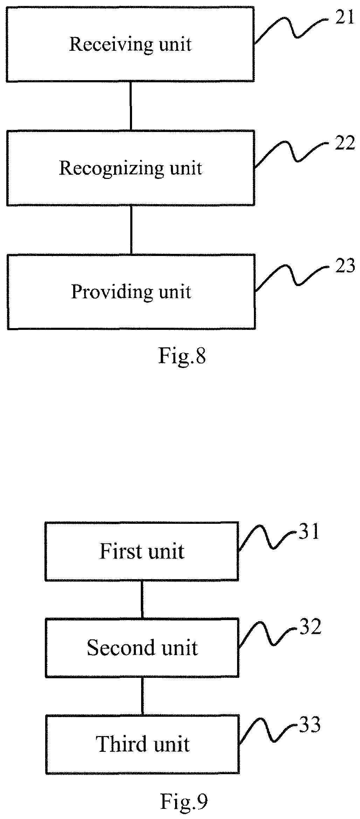

Correspondingly referring to Fig.8, an apparatus for providing information at the picture receiving device (e.g., the intelligent TV set, the intelligent TV set-top box, and the server above) side according to an embodiment of the disclosure includes the following units.

A receiving unit 21 is configured to receive a screenshot instruction to instruct a picture display device to take a screenshot of an image of a picture being displayed.

A recognizing unit 22 is configured to take a screenshot of the image of the picture being displayed on the picture display device, and to recognize elements in the image, in response to the screenshot instruction.

A providing unit 23 is configured to determine element information in the image, and to provide it to a user.

Optionally the recognizing unit 22 is configured to take a screenshot of the image of the picture being displayed, through the picture display device.

Optionally the recognizing unit 22 is configured to recognize the elements in the image through a digital video transforming box of the picture display device.

Optionally the providing unit 23 is configured to obtain the element information in the image through a server, or a digital video transforming box of the picture display device.

Optionally the providing unit 23 is configured to output and display the element information on the picture display device in a split screen display mode.

Optionally before the providing unit 23 outputs and displays the element information on the picture display device in the split screen display mode, the receiving unit 21 is further configured to receive a split screen display instruction transmitted by a mobile terminal.

Optionally the providing unit 23 is further configured to: receive a request transmitted by a mobile terminal for the element information in the image, and transmit the element information, or related information for obtaining the element information to the mobile terminal in response to the request.

Referring to Fig.9, an apparatus for providing information at the digital video transforming box side (e.g., intelligent TV set-top box above) of a picture display device, or the server side according to an embodiment of the disclosure includes the following units.

A first unit 31 is configured to determine elements in an image, of a picture being displayed, of which a screenshot is taken by a picture display device.

A second unit 32 is configured to search for element information in the image.

A third unit 33 is configured to provide the found element information.

Optionally at the digital video transforming box side, the first unit 31 is configured to: receive a screenshot instruction to instruct the picture display device to take a screenshot of the image of the picture being displayed; transmit the screenshot instruction to the picture display device; receive the screenshot, of the image of the picture being displayed, taken by the picture display device and transmitted by the picture display device; and recognize the elements in the image.

Optionally the third unit 33 is configured to provide the found element information to the picture display device.

Optionally the third unit 33 is configured to transmit a split screen display instruction to provide the element information in the image to the picture display device, and to instruct the picture display device to display the element information in the image in a slit screen display mode.

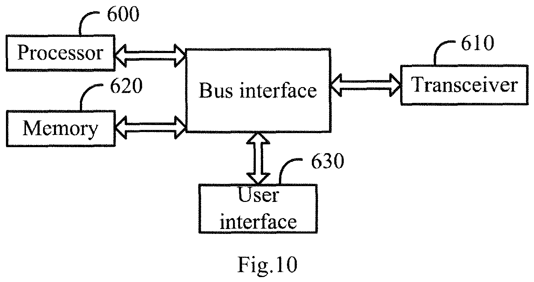

It shall be noted that all of the intelligent terminal, the intelligent TV set, and the digital video transforming box of the intelligent TV set above according to the embodiments of the disclosure can be appreciated as a terminal (or a computing device). An embodiment of the disclosure provides a computing device, which can particularly be a desktop computer, a portable computer, an intelligent mobile phone, a tablet computer, a Personal Digital Assistant (PDA), an intelligent TV set (which can include a remote controller), an intelligent TV digital video transforming box, etc. As illustrated in Fig.10, the computing device can include a Central Processing Unit (CPU), a memory, an input/output device, etc., where the input device can include a keyboard, a mouse, a touch screen, a remote controller, etc., and the output device can include a display device, e.g., a Liquid Crystal Display (LCD), a Cathode Ray Tube (CRT) display, etc.

The memory can include a Read Only Memory (ROM) and a Random Access Memory (RAM), and provide the processor with program instructions and data stored in the memory. In the embodiment of the disclosure, the memory can be configured to store program of a method for obtaining information, or a method for providing information. The processor can retrieve the program instructions stored in the memory, and execute the retrieved program instructions to perform the steps in the respective methods above.

An embodiment of the disclosure further provides a computer storage medium configured to store computer program instructions to be executed by the computing device above, where the computer program instructions include program for performing the respective methods above.

The computer storage medium can be any available medium or data storage device accessible by a computer, and include but will not be limited to a magnetic memory (e.g., a floppy disk, a hard disk, a magnetic tape, a magnetic-optical disk (MO), etc.), an optical memory (e.g., a CD, a DVD, a BD, an HVD, etc.), a semiconductor memory (e.g., an ROM, an EPROM, an EEPROM, a nonvolatile memory (NAND FLASH), a solid hard disk (SSD), etc.

Referring to Fig.10, a terminal according to an embodiment of the disclosure includes a bus interface, a processor 600, a transceiver 610, a memory 620, and a user interface 630.

The processor 600 is configured to read and execute program in the memory 620 to transmit a screenshot instruction through the transceiver 610 to instruct a picture display device to take a screenshot of an image of a picture being displayed, and to obtain element information in the image through the transceiver 610.

Optionally the processor 600 is configured to transmit the screenshot instruction to the picture display device, or a digital video transforming box connected with the picture display device through the transceiver 610.

Optionally before the processor 600 obtains the element information in the image through the transceiver 610, the processor 600 is further configured to transmit a request for the element information in the image to the picture display device or the digital video transforming box connected with the picture display device through the transceiver 610.

Alternatively the processor 600 is configured to read and execute program in the memory 620 to: receive a screenshot instruction through the transceiver 610 to instruct the picture display device to take a screenshot of an image of a picture being displayed; take a screenshot of the image of the picture being displayed on the picture display device, and to recognize elements in the image, in response to the screenshot instruction; and determine element information in the image, and to provide it to a user.

Optionally the processor 600 configured to determine the element information in the image and provide it to the user is configured to obtain the element information in the image through a server, or a digital video transforming box of the picture display device, and to control the display to output and display the element information in a split screen display mode.

Of course, after the element information in the image is obtained through the server, or the digital video transforming box of the picture display device, the processor 600 can be configured to transmit the element information directly to a mobile terminal of a user through the transceiver 610.

Optionally after the element information in the image is determined and provided to the user, the processor 600 is further configured to: receive a request transmitted by the terminal for the element information in the image through the transceiver 610; and transmit the element information, or related information for obtaining the element information to the terminal through the transceiver 610 in response to the request.

Alternatively the processor 600 is configured to read and execute program in the memory 620 to: determine elements in an image, of a picture being displayed, of which a screenshot is taken by a picture display device; search for element information in the image; and provide the found element information.

Optionally the processor 600 configured to determine the elements in the image, of the picture being displayed, of which a screenshot is taken by the picture display device is configured to: receive a screenshot instruction to instruct the picture display device to take a screenshot of the image of the picture being displayed, through the transceiver 610; transmit the screenshot instruction to the picture display device through the transceiver 610; receive the screenshot, of the image of the picture being displayed, taken by the picture display device and transmitted by the picture display device, through the transceiver 610; and recognize the elements in the image.

Optionally the processor 600 configured to provide the found element information is configured to provide the found element information to the picture display device through the transceiver 610.

Optionally the processor 600 is configured to transmit a split screen display instruction to provide the element information in the image to the picture display device, and to instruct the picture display device to display the element information in the image in a slit screen display mode.

The transceiver 610 is configured to be controlled by the processor 600 to receive and transmit data.

Here in Fig.10, the bus architecture can include any number of interconnecting buses and bridges to particularly link together various circuits including one or more processors represented by the processor 600, and one or more memories represented by the memory 620. The bus architecture can further link together various other circuits, e.g., prophetical devices, manostats, power management circuits, etc., all of which are well known in the art, so a further description thereof will be omitted in this context. The bus interface serves as an interface. The transceiver 610 can be a number of elements including a transmitter and a receiver, which are units for communication with various other devices over a transmission medium. For different user equipments, the user interface 630 can also be an interface via which external or internal devices can be connected as appropriate, where the connected devices include but will not be limited to a keypad, a display, a speaker, a microphone, a joystick, etc.

The processor 600 is responsible for managing the bus architecture and performing normal processes, and the memory can store data for use by the processor in performing the operations.

Optionally the processor 600 can be a Central Processing Unit (CPU), an Application Specific Integrated Circuit (ASIC), a Field-Programmable Gate Array (FPGA), or a Complex Programmable Logic Device (CPLD).

The embodiments of the disclosure provide a method, apparatus, and system for processing a screenshot of a TV image, where an intelligent TV set receives a screenshot instruction transmitted by a user, takes a screenshot of an image selected by the user in response to the instruction, then searches the Internet for information about a person, an object, or a landscape in the screenshot of the image, and displays it in a split screen display mode, and finally transmits the related information to an intelligent terminal of the user, so that the information about the person, the object, the landscape, etc., in the TV picture interesting to the user can be found conveniently and rapidly as a result of the search, and presented and transmitted to the user without hindering a TV program from being played, and the user from watching, thus improving the experience of the user.

Those skilled in the art shall appreciate that the embodiments of the disclosure can be embodied as a method, a system or a computer program product. Therefore the disclosure can be embodied in the form of an all-hardware embodiment, an all-software embodiment or an embodiment of software and hardware in combination. Furthermore the disclosure can be embodied in the form of a computer program product embodied in one or more computer useable storage mediums (including but not limited to a disk memory, a CD-ROM, an optical memory, etc.) in which computer useable program codes are contained.

The disclosure has been described in a flow chart and/or a block diagram of the method, the device (system) and the computer program product according to the embodiments of the disclosure. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the disclosure have been described, those skilled in the art benefiting from the underlying inventive concept can make additional modifications and variations to these embodiments. Therefore the appended claims are intended to be construed as encompassing the preferred embodiments and all the modifications and variations coming into the scope of the disclosure.

Evidently those skilled in the art can make various modifications and variations to the disclosure without departing from the spirit and scope of the disclosure. Thus the disclosure is also intended to encompass these modifications and variations thereto so long as the modifications and variations come into the scope of the claims appended to the disclosure and their equivalents.

## Claims

1. A method for obtaining information, the method comprising:
transmitting, by a mobile terminal, a screenshot instruction to a picture receiving device to instruct a picture display device in the picture receiving device to take a screenshot of an image of a picture being displayed; and
obtaining element information in the image.

2. The method according to claim 1, wherein the mobile terminal is a mobile phone, or a remote controller of the picture receiving device.

3. The method according to claim 1, wherein before obtaining the element information in the image, the method further comprises: transmitting a request for the element information in the image to the picture receiving device.

4. A method for providing information, the method comprising:
receiving a screenshot instruction to instruct a picture display device to take a screenshot of an image of a picture being displayed;
taking a screenshot of the image of the picture being displayed on the picture display device, and recognizing elements in the image in response to the screenshot instruction; and
determining element information in the image, and providing it to a user.

5. The method according to claim 4, wherein taking a screenshot of the image of the picture being displayed on the picture display device comprises: taking a screenshot of the image of the picture being displayed, through the picture display device.

6. The method according to claim 4, wherein recognizing the elements in the image comprises: recognizing the elements in the image through a digital video transforming box of the picture display device.

7. The method according to claim 4, wherein determining the element information in the image comprises:
obtaining the element information in the image through a server, or a digital video transforming box of the picture display device.

8. The method according to any one of claims 4 to 7, wherein providing the element information to the user comprises:
outputting and displaying the element information on the picture display device in a split screen display mode.

9. The method according to claim 8, wherein before outputting and displaying the element information on the picture display device in a split screen display mode, the method further comprises:
receiving a split screen display instruction transmitted by a mobile terminal.

10. The method according to any one of claims 4 to 7, wherein after determining the element information in the image, and providing it to the user, the method further comprises:
receiving a request transmitted by a mobile terminal for the element information in the image; and
transmitting the element information, or related information for obtaining the element information to the mobile terminal in response to the request.

11. An apparatus for obtaining information, wherein the apparatus is a mobile terminal, and comprises:
a transmitting unit configured to transmit a screenshot instruction to a picture receiving device to instruct a picture display device in the picture receiving device to take a screenshot of an image of a picture being displayed; and
an obtaining unit configured to obtain element information in the image.

12. The apparatus according to claim 11, wherein the mobile terminal is a mobile phone, or a remote controller of the picture display device.

13. The apparatus according to claim 11, wherein before the obtaining unit obtains the element information in the image, the transmitting unit is further configured to transmit a request for the element information in the image to the picture receiving device.

14. An apparatus for providing information, the apparatus comprising:
a receiving unit configured to receive a screenshot instruction to instruct a picture display device to take a screenshot of an image of a picture being displayed;
a recognizing unit configured to take a screenshot of the image of the picture being displayed on the picture display device, and recognize elements in the image in response to the screenshot instruction; and
a providing unit configured to determine element information in the image, and provide it to a user.

15. The apparatus according to claim 14, wherein the recognizing unit is configured to: take a screenshot of the image of the picture being displayed, through the picture display device.

16. The apparatus according to claim 14, wherein the recognizing unit is configured to: recognize the elements in the image through a digital video transforming box of the picture display device.

17. The apparatus according to claim 14, wherein the providing unit is configured to: obtain the element information in the image through a server, or a digital video transforming box of the picture display device.

18. The apparatus according to any one of claims 14 to 17, wherein the providing unit is configured to: output and display the element information on the picture display device in a split screen display mode.

19. The apparatus according to claim 18, wherein before the providing unit outputs and displays the element information on the picture display device in the split screen display mode, the receiving unit is further configured to:
receive a split screen display instruction transmitted by a mobile terminal.

20. The apparatus according to any one of claims 14 to 17, wherein the providing unit is further configured to:
receive a request transmitted by a mobile terminal for the element information in the image; and
transmit the element information, or related information for obtaining the element information to the mobile terminal in response to the request.
